# EUROPÄISCHE PATENTSCHRIFT

(11) **EP 2 532 273 B1**
(45) Veröffentlichungstag und Bekanntmachung des Hinweises auf die Patenterteilung: **06.07.2016**
(21) Anmeldenummer: 12171104.8
(22) Anmeldetag: 06.06.2012
(51) Int. Cl.: F24C 15/16, F16B 5/06

(54) **Befestigungselement**
Fastening element
Elément de fixation

(30) Priorität: 09.06.2011 DE 102011050989
(43) Veröffentlichungstag der Anmeldung: 12.12.2012
(73) Patentinhaber: Accuride International GmbH, 65582 Diez/Lahn (DE)
(72) Erfinder: Mainusch, Fabian, 56073 Koblenz (DE); Petri, Friedhelm, 65558 Cramberg (DE)
(74) Vertreter: WSL Patentanwälte Partnerschaft mbB

(56) Entgegenhaltungen:
- DE-U1-202008 010 187
- DE-U1-202009 001 961
- DE-U1-202009 003 045
- DE-U1-202009 005 177

## Beschreibung

Die vorliegende Erfindung betrifft ein Befestigungselement zur lösbaren Befestigung einer Führungsschiene an einem an einer Seitenwand eines von mehreren Wänden umschlossenen Raumes verlaufenden Seitengitter, wobei das Seitengitter wenigstens einen horizontalen Stab aufweist, wobei das Befestigungselement eine biegsame Rastfeder mit einer Rastnase aufweist, wobei die Rastnase in einem ersten befestigten Zustand des Befestigungselements mit dem horizontalen Stab in rastendem Eingriff ist und zum Lösen des rastenden Eingriffs ein Verbiegen der Rastfeder erfolgt.

Derartige Befestigungselemente, mit denen beispielsweise eine Führungsschiene eines Teleskopauszugs an einem Seitengitter in einem Ofen angebracht werden kann, ermöglichen das nachträgliche lösbare Anbringen eines Teleskopauszugs für die Auflage eines Gargutträgers in einem Ofen, in dem ein Seitengitter zum Einschub oder zur Auflage von Gargutträgern vorgesehen ist. Insbesondere die Festlegung des Befestigungselements an einem Stab des Seitengitters mit einer lösbaren Rastverbindung ist vorteilhaft, da solche Rastverbindungen einfach und ohne Werkzeugeinsatz befestig- und lösbar sind.

Im Stand der Technik sind Befestigungselemente bekannt, bei denen eine Rastverbindung vorgesehen ist, um eine Stabilisierung der Anbringung des Befestigungselements an einem Seitengitter zu erzielen. Um ein Überbiegen der Rastfeder zu verhindern, sind an den bekannten Befestigungselementen Anschläge vorgesehen, an die die Rastfeder vor dem Überbiegen mittelbar oder unmittelbar anschlägt, wodurch ein weiteres Verbiegen verhindert wird. Beispielsweise wird in DE 20 2008 010 187 U1 ein Schnellbefestigungselement zur Befestigung einer Führungsschiene an einer Stange eines gitterartigen Seitenteils offenbart, wobei die Stange einen zu einer Längsrichtung winklig abgebogenen Endabschnitt aufweist und das Schnellbefestigungselement mit einer ersten Klammer einen in Längsrichtung angeordneten Abschnitt der Stange zumindest teilweise umgreift und mit einer zweiten Klammer den abgebogenen Endabschnitt zumindest teilweise umgreift, wobei ein federndes Rastelement vorgesehen ist, das die Stange hintergreift, wobei an dem Schnellbefestigungselement ein Anschlag zur Begrenzung des Schwenkweges des Rastelementes vorgesehen ist.

Problematisch bei derartigen Anschlägen ist allerdings, dass ein leichtes Überbiegen, das ggf. bei falscher Anbringung oder bei Anbringung an einem dickeren horizontalen Stab erforderlich sein kann, vollständig verhindert wird und nur unter großer Gewalteinwirkung und damit einer bleibenden Deformation und ggf. Zerstörung des Befestigungselementes möglich ist. Eine Anbringung von Befestigungselementen mit derartigen Anschlägen an Stäben mit unterschiedlichen Dicken ist aus diesem Grund nicht möglich. Zudem muss durch den Anschlag ein zusätzliches Teil an dem Befestigungselement vorgesehen werden, was einen größeren Aufwand und ggf. Materialkosten bei der Fertigung verursacht.

Vor diesem Hintergrund bestand die Aufgabe, ein Befestigungselement mit einer Rastverbindung bereitzustellen, bei der einerseits ein Überbiegen der Rastfeder der Rastverbindung verhindert wird, andererseits aber auch ausreichend Spiel beim Lösen der Rastverbindung besteht, so dass das Befestigungselement für die Anbringung an unterschiedlich dicken Stäben geeignet ist.

Diese Aufgabe wird erfindungsgemäß gelöst durch ein Befestigungselement der eingangs genannten Art, bei dem die Rastfeder mit einer formsteifen Betätigungslasche verbunden ist, die in einem zweiten Zustand des Befestigungselement mit einer mit dem Befestigungselement verbundenen Begrenzungslasche benachbart in einer Ebene liegt, wobei die Rastfeder in dem zweiten Zustand des Befestigungselements zum Lösen des rastenden Eingriffs so weit verbogen ist, dass die Rastnase nicht mit dem horizontalen Stab in rastendem Eingriff ist.

Es versteht sich, dass die Betätigungslasche und die Begrenzungslasche in dem ersten befestigten Zustand des Befestigungselement nicht in einer Ebene liegen.

Der erste befestigte Zustand bezeichnet den Zustand, in dem das Befestigungselement an dem Seitengitter angebracht ist und die Führungsschiene an dem Seitengitter mit Hilfe des Befestigungselements befestigt ist. Der zweite Zustand des Befestigungselements bezeichnet einen Zustand, in dem durch äußere Krafteinwirkung, bevorzugt durch Manipulation mit einem oder mehreren Fingern an der Betätigungslasche diese in die Ebene der Begrenzungslasche bewegt und dadurch die Rastfeder verbogen ist. Es versteht sich, dass das Verbiegen der Rastfeder in diesem Zustand nur so weit erfolgt, dass ein elastisches Zurückfedern möglich ist und kein Überbiegen der Rastfeder erfolgt. In diesem Zustand kann das Befestigungselement von dem Seitengitter entfernt werden.

Durch eine solche Anordnung von Betätigungslasche zu Begrenzungslasche wird beim Bewegen der Betätigungslasche zum Lösen des rastenden Eingriffs der Rastnase mit dem horizontalen Stab mit einem oder mehreren Fingern die Rastfeder so weit verbogen, bis die zum Bewegen der Betätigungslasche verwendeten Finger mit der Begrenzungslasche in Kontakt treten. Die die Betätigungslasche bewegende Person wird durch diesen Kontakt ein weiteres Bewegen der Betätigungslasche vermeiden, wodurch ein Überbiegeschutz besteht.

Vorzugsweise sind Betätigungslasche und Begrenzungslasche in ihren Ausdehnungen in der Fläche so gestaltet, dass die Betätigungslasche mit einem Finger bewegbar ist, wobei der Finger zwangsweise über Ränder der Betätigungslasche seitlich hinausragt und durch dieses Hinausragen mit der Begrenzungslasche in Kontakt tritt, wenn die Rastfeder so weit verbogen ist, dass die Betätigungslasche und die Begrenzungslasche in einer Ebene liegen. Dadurch wird das Entfernen des Befestigungselements von dem Seitengitter ermöglicht, wobei ein Überbiegen der Rastfeder des Betätigungselements verhindert wird.

Bei einem solchen Befestigungselement ist ein Überbiegen der Rastfeder generell möglich und beim Lösen des Befestigungselements von dem Seitengitter ist kein starrer Endpunkt für die Bewegung der Betätigungslasche und das Verbiegen der Rastfeder festgelegt. Vielmehr kann ein Bewegen der Betätigungslasche zwischen ihrer Position in dem ersten und ihrer Position in dem zweiten Zustand des Befestigungselements stufenlos erfolgen und die Betätigungslasche auch über die Position in dem zweiten Zustand hinausbewegt werden.

Der Begriff "innenraumseitig", wie er im vorliegenden Text verwendet wird, bezeichnet eine Seite oder Fläche, die dem Innenraum (z.B. Garraum) des von mehreren Wänden umschlossenen Raums zugewandt ist. Der Begriff "wandseitig" bezeichnet eine Seite oder Fläche, die in Richtung der Innenwandung des von mehreren Wänden umschlossenen Raums weist.

Der von mehreren Wänden umschlossene Raum ist vorzugsweise ein Küchengerät, bevorzugt ein Ofen, wobei die Innenwandung der Muffelwand des Ofens entspricht. Die Seitengitter sind an oder vor den aus Blickrichtung der Öffnung in den umschlossenen Raum seitlichen Wänden angebracht.

Der Begriff "nicht mehr in rastendem Eingriff sein" bezeichnet einen Zustand, in dem die Rastnase durch das Verbiegen der Rastfeder so weit relativ zu dem horizontalen Stab bewegt wurde, dass ein Einrasten nicht mehr erfolgt. In einer Ausführungsform berührt die Rastnase auch in diesem Zustand dennoch den horizontalen Stab.

Der Begriff "in einer Ebene liegen" bezeichnet einen Zustand in dem wenigstens eine Fläche der Betätigungslasche, die von der Bewegungsrichtung von der Position der Betätigungslasche in dem ersten Zustand zu der Position in dem zweiten Zustand abgewandt ist, im Wesentlichen in einer Ebene mit einer Fläche der Begrenzungslasche liegt, die in die gleiche Richtung gewandt ist. Es ist daher nicht erforderlich, dass die Betätigungslasche und die Begrenzungslasche gleiche Materialstärken aufweisen. Die Laschen liegen dadurch in dem zweiten Zustand des Befestigungselements in einer Ebene, dass ihre entgegen der Bewegungsrichtung der Betätigungslaschen von dem ersten in den zweiten Zustand weisenden Flächen in einer Ebene liegen. Vorzugsweise bezeichnet der Begriff "benachbart in einer Ebene liegen" dass in gleiche Richtung weisende Flächen von Betätigungslasche und Begrenzungslasche an einem Abschnitt von wenigstens 2 mm, vorzugsweise wenigstens 5 mm, Kantenlänge einen Abstand aufweisen, der höchstens 6 mm, vorzugsweise höchstens 4 mm, bevorzugt höchstens 3 mm beträgt.

In einer Ausführungsform sind dazu die Betätigungslasche und die Begrenzungslasche flächig ausgestaltet.

Zweckmäßig ist das Befestigungselement einstückig durch Stanzen und nachfolgendes Biegen aus einem Materialabschnitt hergestellt. Bevorzugt ist das Material hitze- und korrosionsbeständig. Bei einem einstückigen Befestigungselement wird die Elastizität der Rastfeder bereitgestellt, indem die Breite des Materials in diesem Bereich im Vergleich zu dem restlichen Befestigungselement verjüngt ist. In alternativen Ausführungsformen ist stattdessen oder zusätzlich die Materialstärke in diesem Bereich verringert.

In einer Ausführungsform ist die Begrenzungslasche eine Verlängerung eines Teils des Befestigungselements, das eine andere Funktion erfüllt. Zu solchen Teilen gehören u. a. Abschnitte, die auf dem horizontalen Stab aufliegen, Abschnitte, die den horizontalen Stab umfassen, und Abschnitte, die unterhalb des horizontalen Stabs verlaufen und ggf. von unten an dem horizontalen Stab anliegen.

In einer Ausführungsform ist die Betätigungslasche eine Verlängerung der Rastfeder oder ein mit der Rastfeder im ersten Zustand des Befestigungselements in einer Ebene liegender Abschnitt an der Rastfeder.

In bestimmten Ausführungsformen liegen die Betätigungslasche und die Begrenzungslasche in dem zweiten Zustand des Befestigungselements so benachbart in einer Ebene, dass ein Teil das andere von ein, zwei, drei oder vier Richtungen unmittelbar umgibt.

Bevorzugt liegt die Betätigungslasche in dem zweiten Zustand des Befestigungselements mit der Begrenzungslasche so benachbart in einer Ebene, dass der geringste Abstand zwischen der Betätigungslasche und der Begrenzungslasche höchstens 5 mm, bevorzugt höchstens 3 mm, und besonders bevorzugt höchstens 2 mm beträgt. Durch diesen geringsten Abstand wird sichergestellt, dass beim Bewegen der Betätigungslasche im zweiten Zustand eine Berührung des betätigenden Fingers oder der betätigenden Finger mit dem Befestigungselement erfolgt.

In einer Ausführungsform beträgt der geringste Abstand zwischen der Betätigungslasche und der Begrenzungslasche in dem zweiten Zustand des Befestigungselements mindestens 0,2 mm, bevorzugt mindestens 0,5 mm. Dadurch wird sichergestellt, dass beim Bewegen der Betätigungslasche ein Verhaken der Betätigungslasche mit der Begrenzungslasche nicht erfolgen kann.

In einer bevorzugten Ausführungsform beträgt die Tiefe und/oder die Breite der Betätigungslasche und/oder der Begrenzungslasche an einer Stelle, an der die Laschen benachbart in einer Ebene liegen, zwischen 3 mm und 18 mm, vorzugsweise zwischen 8 und 12 mm. Bei diesen Ausdehnungen der Betätigungslasche und/oder der Begrenzungslasche ist sichergestellt, dass ein zur Bewegung der Betätigungslasche verwendeter Finger in dem zweiten Zustand des Befestigungselements mit der Begrenzungslasche in Kontakt tritt.

Unter einer Stelle, an der die Laschen benachbart in einer Ebene liegen, ist vorzugsweise eine Stelle zu verstehen, an der der Abstand höchstens 6 mm, bevorzugt höchstens 4 mm, besonders bevorzugt höchstens 3 mm beträgt. Die Breite und Tiefe in Bezug auf die Betätigungslasche und die Begrenzungslasche beziehen sich auf eine Sicht auf die jeweilige Laschen von deren freiem Ende aus, wobei das freie Ende der Lasche ein nicht mit dem Befestigungselement unmittelbar verbundenes Ende der Lasche ist. Vorzugsweise bezeichnen Breite bzw. Tiefe Ausdehnungen der Laschen, die sich im Wesentlichen parallel bzw. im Wesentlichen senkrecht zu einem freien Ende der Laschen erstrecken.

Die Breite einer der Laschen bezieht sich auf die gesamte Breite der Laschen und/oder in bestimmten Ausführungsformen auf die Breite von Abschnitten der Laschen, die in dem zweiten Zustand des Befestigungselements benachbart zu der jeweils anderen Lasche in einer Ebene liegen. Dementsprechend bezieht sich der Begriff Tiefe auf die gesamte Tiefe der Laschen und/oder auf die Tiefe von Abschnitten der Laschen, die in dem zweiten Zustand des Befestigungselements benachbart zu der jeweils anderen Lasche in einer Ebene liegen.

Bevorzugt beträgt die Breite der Betätigungslasche und/oder der Begrenzungslasche an einer Stelle, an der die Laschen benachbart in einer Ebene liegen, zwischen 3 mm und 18 mm, vorzugsweise zwischen 8 und 12 mm. Bei Befestigungselementen, die an einem Seitengitter in einem Backofen angebracht werden, ist es sinnvoll, die Tiefe von in den Innenraum weisenden Laschen und Laschen, die in Richtung der Öffnung weisen, möglichst kurz zu bemessen, damit der Raumbedarf des Befestigungselements insgesamt möglichst gering ist. Es hat sich daher als vorteilhaft erwiesen, wenn die Breite an einer Stelle, an der die Laschen benachbart in einer Ebene liegen, den oben angegebenen Maßen entspricht.

In einer Ausführungsform weist die Betätigungslasche oder die Begrenzungslasche einen mehrere, insbesondere zwei, Abschnitte der jeweiligen Lasche verbindenden Steg auf, der vorzugsweise eine Ausdehnung senkrecht zu dessen Längserstreckung und in der Ebene, in der die Betätigungslasche und Begrenzungslasche in dem zweiten Zustand des Befestigungselements liegen, auf, die zwischen 2 und 8 mm beträgt.

In einer Ausführungsform ist die Betätigungslasche über einen gekröpften Abschnitt der Rastfeder mit dieser verbunden und verläuft im ersten Zustand des Befestigungselements im Wesentlichen parallel zu der Rastfeder. Durch diese Ausgestaltung entspricht das Ausmaß des Verbiegens der Rastfeder an der Stelle, an der die Betätigungslasche mit dieser verbunden ist im Wesentlichen dem Bewegungsweg der Betätigungslasche.

In einer Ausführungsform befindet sich die Betätigungslasche auf der der Rastnase zugewandten Seite von der Rastfeder. Durch eine solche Ausgestaltung wird durch Druck auf die Betätigungslasche unmittelbar ein Verbiegen der Rastfeder verursacht.

In einer Ausführungsform ist die Begrenzungslasche über einen gekröpften Abschnitt des Befestigungselements mit diesem verbunden. Durch ein solches Verbinden der Begrenzungslasche mit dem Befestigungselement kann die Ebene, in der in dem zweiten Zustand des Befestigungselements die Betätigungslasche zu liegen kommen soll und damit das Verbiegen der Rastfeder bei der Herstellung des Befestigungselements festgelegt werden.

In einer Ausführungsform weist die Begrenzungslasche eine Aussparung auf und die Betätigungslasche ist so angeordnet, dass sie in dem zweiten Zustand des Befestigungselements innerhalb der Aussparung der Begrenzungslasche mit der Begrenzungslasche benachbart in einer Ebene liegt. Vorzugsweise ist die Aussparung so ausgestaltet, dass die Betätigungslasche in dem zweiten Zustand des Befestigungselements von zwei oder drei Seiten von der Begrenzungslasche unmittelbar umgeben ist.

In einer Ausführungsform weist die Betätigungslasche eine Aussparung auf, und die Begrenzungslasche ist so angeordnet, dass es in dem zweiten Zustand des Befestigungselements innerhalb der Aussparung der Betätigungslasche mit der Betätigungslasche benachbart in einer Ebene liegt. Vorzugsweise ist die Aussparung in der Betätigungslasche so ausgestaltet, dass die Betätigungslasche in dem zweiten Zustand des Befestigungselements die Begrenzungslasche von zwei, drei oder vier Seiten unmittelbar umgibt.

In einer Ausführungsform befindet sich die Rastnase im ersten Zustand des Befestigungselementes wandseitig des horizontalen Stabs. Durch diese Anordnung verhindert die Rastnase ein unbeabsichtigtes Bewegen des Befestigungselements und einer damit verbundenen Führungsschiene in Richtung Innenraum des von mehreren Wänden umschlossenen Raumes.

In einer Ausführungsform weist der horizontale Stab einen ersten Bereich auf, der in einer Ebene parallel zur Seitenwand des von mehreren Wänden umschlossenen Raumes verläuft, und wenigstens einen weiteren Bereich, der senkrecht zu diesem ersten Bereich verläuft, wobei die Rastnase im ersten befestigten Zustand des Befestigungselement mit dem ersten Bereich und/oder mit dem weiteren Bereich in Eingriff tritt. Bei einer Ausführungsform, bei der die Rastnase mit dem weiteren Bereich eines so gestalteten horizontalen Stabs in rastenden Eingriff tritt, wird ein unbeabsichtigtes Bewegen des Befestigungselements entlang der Seitenwand in die Richtung verhindert, in der der weitere Bereich in Bezug auf die Rastnase liegt.

In einer Ausführungsform weist der horizontale Stab einen ersten Bereich auf, der in einer Ebene parallel zur Seitenwand des von mehreren Wänden umschlossenen Raumes verläuft, und wenigstens einen weiteren Bereich, der senkrecht zu diesem ersten Bereich verläuft, wobei die Betätigungslasche und die Begrenzungslasche im ersten Zustand des Befestigungselements innenraumseitig des ersten Bereichs des horizontalen Stabs liegen. Je nach Art und Form der Führungsschiene oder Teleskopschiene an dem Befestigungselement kann es erforderlich sein, dass eine Betätigung der Betätigungslasche mit einer Position der Hand des Betätigenden möglich ist, bei der die Hand sich innenraumseitig des Befestigungselementes und des Seitengitters befindet. Eine solche Handhabung des Befestigungselements wird durch diese Ausgestaltung möglich.

In einer Ausführungsform weist der horizontale Stab einen ersten Bereich auf, der in einer Ebene parallel zur Seitenwand des von mehreren Wänden umschlossenen Raumes verläuft, und wenigstens einen weiteren Bereich, der senkrecht zu diesem ersten Bereich verläuft, wobei die Betätigungslasche und die Begrenzungslasche an dem weiteren Bereich angeordnet sind. Eine derartige Ausgestaltung ist insbesondere für ein Befestigungselement geeignet, das sich in an dem Seitengitter befestigtem Zustand im Bereich der Öffnung des von mehreren Wänden umschlossenen Raumes an dem Seitengitter befindet. Vorzugsweise sind dazu sowohl Begrenzungslasche als auch Betätigungslasche so angeordnet, dass sie aus Blickrichtung der Öffnung in den Innenraum vor dem weiteren Bereich des horizontalen Stabes liegen. Damit kann das Befestigungselement besonders leicht durch Bewegen der Betätigungslasche und Abziehen des Befestigungselements von dem Stab gelöst werden.

In einer Ausführungsform weist das Befestigungselement einen Auflageabschnitt auf, der im befestigtem Zustand des Befestigungselement auf dem horizontalen Stab aufliegt, und wenigstens einen Halteabschnitt, der wenigstens einen Teil eines Bereichs des horizontalen Stabs im ersten befestigten Zustand des Befestigungselement zumindest teilweise umgreift. Bei einer solchen Ausgestaltung wird das Befestigungselement durch den Auflageabschnitt und den Halteabschnitt in dem ersten befestigten Zustand an dem Seitengitter stabilisiert.

In einer Ausführungsform weist das Befestigungselement wenigstens eine Befestigungslasche aufweist, die in einer Ebene parallel zu der Seitenwand und wandseitig des horizontalen Stabs verläuft. Diese Ausgestaltung dient der weiteren Stabilisierung des Befestigungselements in dem ersten befestigten Zustand an dem Seitengitter, da dadurch der Schwerpunkt von Befestigungselement mit Führungsschiene zwischen Innenwand und horizontalem Stab liegt, wodurch ein Kippen der Führungsschiene in Richtung des Innenraums verhindert wird.

Die der Erfindung zugrundeliegende Aufgabe wird auch gelöst durch eine Teleskopschiene mit einem oben beschriebenen Befestigungselement. Die Teleskopschiene ist vorzugsweise über ihre Führungsschiene mit dem Befestigungselement, bevorzugt durch Niet- oder Schweißverbindung verbunden.

Weitere Vorteile, Merkmale und Anwendungsmöglichkeiten der vorliegenden Erfindung werden deutlich anhand der folgenden Beschreibung bevorzugter Ausführungsformen und den dazugehörigen Figuren. Es zeigen:
- Figur 1a:: ein Ausführungsform eines erfindungsgemäßen Befestigungselements,
- Figur 1b:: die Ausführungsform aus Figur 1 a in einer anderen Ansicht,
- Figur 2a:: eine weitere Ausführungsform eines erfindungsgemäßen Befestigungselements und
- Figur 2b:: die Ausführungsform aus Figur 2a in einer anderen Ansicht.

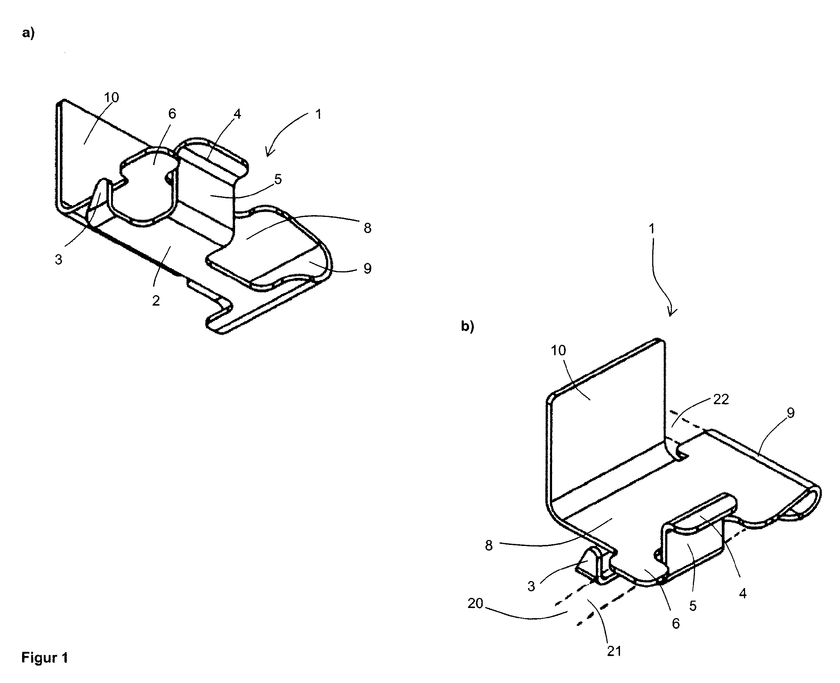

In Figur 1 ist ein Befestigungselement 1 gezeigt, das eine Rastfeder 2 mit einer Rastnase 3 aufweist. Die Rastfeder 2 ist mit einem Auflageabschnitt 8 des Befestigungselements über einen Halteabschnitt 9 verbunden, der in einem Zustand, in dem das Befestigungselement 1 an einer horizontalen Stange 20 eines Seitengitters angebracht ist, einen weiteren Bereich der Stange, der senkrecht zu der Seitenwand und einem ersten Bereich der Stange 21 verläuft, umfasst. Die Rastfeder 2 ist mit einer formsteifen Betätigungslasche 4 über einen gekröpften Abschnitt 5 verbunden. Eine Begrenzungslasche 6 schließt sich unmittelbar an den Auflageabschnitt 8 an. Senkrecht zu dem Auflageabschnitt und in an einem Seitengitter angebrachtem Zustand des Befestigungselements parallel zu der Seitenwand weist das Befestigungselement eine Befestigungslasche 10 auf. An diese Befestigungslasche 10 kann eine Führungsschiene eines Teleskopauszugs angebracht werden, was jedoch in Figur 1 nicht dargestellt ist.

Das Befestigungselement in Figur 1 ist einstückig hergestellt. Die elastische Federwirkung des Federelements 2 wird durch eine Verjüngung der Breite des Materialabschnitts in diesem Bereich bereitgestellt. Das übrige Befestigungselement ist im Wesentlichen formsteif.

In Figur 1a ist lediglich das Befestigungselement in einer Ansicht von seitlich unten gezeigt, wobei die Anbringung von Rastfeder 2 an dem Befestigungselement 1 und die damit verbundene Betätigungslasche 4 gut erkennbar sind. Das Befestigungselement ist in einem Zustand dargestellt, der im Wesentlichen dem ersten befestigten Zustand entspricht.

In der in Figur 1b gezeigten Ansicht des erfindungsgemäßen Befestigungselements ist der Stab 20 mit gestrichelten Linien skizziert, wodurch erkennbar wird, dass die Rastnase 3 in dem ersten an dem Seitengitter befestigten Zustand mit dem Stab in rastenden Eingriff tritt. Wird die Betätigungslasche 4 durch Druck von oben nach unten bewegt, wird gleichzeitig die Rastfeder 2 so verbogen, dass die Rastnase 3 nicht mehr in rastenden Eingriff mit dem Stab tritt.

In einem nicht dargestellten zweiten Zustand, in dem der rastende Eingriff der Rastnase 3 mit dem Stab 20 gelöst ist, liegen Betätigungslasche 4 und Begrenzungslasche 6 benachbart in einer Ebene, wobei die Betätigungslasche 4 von der Begrenzungslasche 6 zusammen mit dem Auflageabschnitt 8 von zwei Seiten unmittelbar umgeben ist. Die Betätigungslasche weist eine Breite auf, die geringer ist, als die Breite eines Fingers, der die Betätigungslasche von dem gezeigten ersten in den nicht dargestellten zweiten Zustand bewegt.

Deutlich erkennbar tritt bei dieser Ausführungsform die Rastnase 2 mit dem ersten Bereich 21 des Stabs 20 in rastenden Eingriff, während ein Halteabschnitt den dazu senkrecht stehenden weiteren Bereich fast vollständig umfasst.

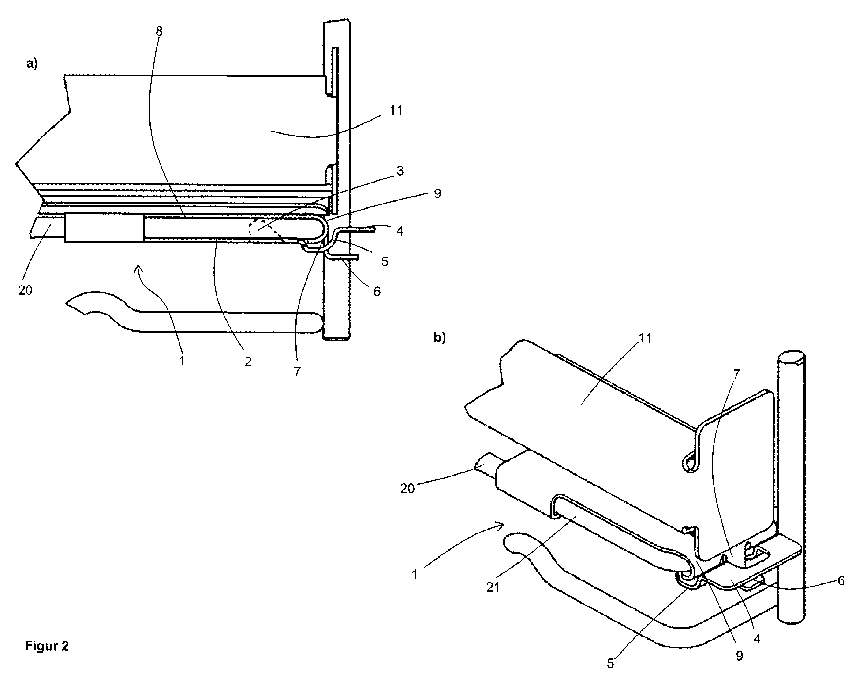

Figur 2 zeigt eine weitere erfindungsgemäße Ausführungsform eines Befestigungselements 1, wobei das Befestigungselement an einem Seitengitter angebracht und mit einer Führungsschiene 11 eines Teleskopauszugs verbunden ist. Das Befestigungselement weist einen Auflageabschnitt 8 auf, mit dem es auf der horizontalen Stange 20 aufliegt. An diesen Abschnitt schließt sich ein Halteabschnitt 9 an, der einen weiteren Bereich 22 der Stange 20 zumindest teilweise umgreift. Weiter schließt sich an den Auflageabschnitt ein schmaler gekröpfter Abschnitt 7 an, mit dem die Begrenzungslasche 6 mit dem Befestigungselement verbunden ist. Unterhalb und wandseitig des horizontalen Stabs 20 verläuft die Rastfeder 2 und eine Rastnase 3 tritt wandseitig mit dem horizontalen Stab 20 in Eingriff. In den in Figur 2 gezeigten perspektivischen Darstellungen ist die Rastnase nicht sichtbar, in Figur 2a ist sie jedoch mit einer gestrichelten Linie dargestellt, um ihre Position zu verdeutlichen. An die Rastfeder 2 schließt sich ein mehrfach gekröpfter Abschnitt 5 an, der unterhalb des Halteabschnitts 9 und um diesen herum verläuft und die Betätigungslasche 4 mit der Rastfeder 3 verbindet. Die Betätigungslasche 4 weist eine Aussparung auf. Durch diese Aussparung ist die Betätigungslasche in mehrere Abschnitte geteilt, die jeweils in dem nicht dargestellten zweiten Zustand des Befestigungselements mit der Begrenzungslasche benachbart in einer Ebene liegen und eine Breite zwischen 3 mm und 18 mm aufweisen. Durch die Ausdehnung der Begrenzungslasche und der Abschnitte der Betätigungslasche, die geringer sind, als ein Finger, mit dem die Betätigungslasche bewegt wird, tritt der Finger in dem zweiten Zustand des Befestigungselements mit der Begrenzungslasche in Kontakt. Die Abschnitte der Betätigungslasche sind durch einen Steg am freien Ende der Lasche verbunden, wobei der Steg in der Tiefe eine Ausdehnung aufweist, die geringer ist als die Breite der Abschnitte und zwischen 2 und 8 mm beträgt.

Sowohl in Figur 2a als auch in Figur 2b ist das Befestigungselement 1 in dem ersten Zustand dargestellt, bei dem der rastenden Eingriff der Rastnase 3 mit dem horizontalen Stab 20 nicht gelöst ist. In dem nicht dargestellten zweiten Zustand des Befestigungselements 1 umgibt bei dieser Ausführungsform die Betätigungslasche 4 die Begrenzungslasche 6, wobei Betätigungslasche 4 und Begrenzungslasche 6 so benachbart in einer Ebene liegen, dass sich die Begrenzungslasche innerhalb der Aussparung der Betätigungslasche befindet.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

## Patentansprüche

1. Befestigungselement (1), geeignet zur lösbaren Befestigung einer Führungsschiene (11) an einem Seitengitter, wobei das Seitengitter an einer Seitenwand eines von mehreren Wänden umschlossenen Raumes verläuft und wenigstens einen horizontalen Stab (20) aufweist,
wobei das Befestigungselement (1) eine biegsame Rastfeder (2) mit einer Rastnase (3) aufweist, wobei die Rastnase (3) in einem ersten befestigten Zustand des Befestigungselements (1) mit dem horizontalen Stab (20) in rastendem Eingriff ist und zum Lösen des rastenden Eingriffs ein Verbiegen der Rastfeder (2) erfolgt, **dadurch gekennzeichnet, dass** die Rastfeder (2) mit einer formsteifen Betätigungslasche (4) verbunden ist, die in einem zweiten Zustand des Befestigungselements (1) mit einer mit dem Befestigungselement (1) verbundenen Begrenzungslasche (6) benachbart in einer Ebene liegt, wobei die Rastfeder (2) in dem zweiten Zustand des Befestigungselements (1) zum Lösen des rastenden Eingriffs so weit verbogen ist, dass die Rastnase (3) nicht mit dem horizontalen Stab (20) in rastendem Eingriff ist.

2. Befestigungselement (1) gemäß Anspruch 1, **dadurch gekennzeichnet, dass** die Betätigungslasche (4) in dem zweiten Zustand des Befestigungselement (1) mit der Begrenzungslasche (6) so benachbart in einer Ebene liegt, dass der geringste Abstand zwischen der Betätigungslasche (4) und der Begrenzungslasche (6) höchstens 5 mm, bevorzugt höchstens 3 mm, und besonders bevorzugt höchstens 2 mm beträgt.

3. Befestigungselement (1) gemäß Anspruch 1 oder 2, **dadurch gekennzeichnet, dass** Tiefe und/oder die Breite der Betätigungslasche (4) und/oder der Begrenzungslasche (6) an einer Stelle, an der die jeweils andere Lasche zu der Betätigungslasche oder der Begrenzungslasche im zweiten Zustand des Befestigungselements benachbart in einer Ebene liegt, zwischen 3 mm und 18 mm, vorzugsweise zwischen 8 mm und 12 mm, beträgt.

4. Befestigungselement (1) gemäß einem der vorangehenden Ansprüche, **dadurch gekennzeichnet, dass** die Betätigungslasche (4) über einen gekröpften Abschnitt (5) der Rastfeder (2) mit dieser verbunden ist und im ersten Zustand des Befestigungselements im Wesentlichen parallel zu der Rastfeder (2) verläuft.

5. Befestigungselement (1) gemäß einem der vorangehenden Ansprüche, **dadurch gekennzeichnet, dass** sich die Betätigungslasche (4) auf der der Rastnase (3) zugewandten Seite von der Rastfeder (2) befindet.

6. Befestigungselement (1) gemäß einem der vorangehenden Ansprüche, **dadurch gekennzeichnet, dass** die Begrenzungslasche (6) über einen gekröpften Abschnitt (7) des Befestigungselements mit diesem verbunden ist.

7. Befestigungselement (1) gemäß einem der vorangehenden Ansprüche, **dadurch gekennzeichnet, dass** die Begrenzungslasche (6) eine Aussparung aufweist und die Betätigungslasche (4) so angeordnet ist, dass sie in dem zweiten Zustand des Befestigungselements innerhalb der Aussparung der Begrenzungslasche (6) mit der Begrenzungslasche benachbart in einer Ebene liegt.

8. Befestigungselement (1) gemäß einem der Ansprüche 1 bis 6, **dadurch gekennzeichnet, dass** die Betätigungslasche (4) eine Aussparung aufweist und die Begrenzungslasche (6) so angeordnet ist, dass es in dem zweiten Zustand des Befestigungselements innerhalb der Aussparung der Betätigungslasche (4) mit der Betätigungslasche (4) benachbart in einer Ebene liegt.

9. Befestigungselement (1) gemäß einem der vorangehenden Ansprüche, **dadurch gekennzeichnet, dass** sich die Rastnase (3) im ersten Zustand des Befestigungselementes wandseitig des horizontalen Stabs (20) befindet.

10. Befestigungselement (1) gemäß einem der vorangehenden Ansprüche, **dadurch gekennzeichnet, dass** der horizontale Stab (20) einen ersten Bereich (21) aufweist, der in einer Ebene parallel zur Seitenwand des von mehreren Wänden umschlossenen Raumes verläuft, und wenigstens einen weiteren Bereich, der senkrecht zu diesem ersten Bereich verläuft, wobei die Rastnase (3) im ersten befestigten Zustand des Befestigungselements mit dem ersten Bereich und/oder mit dem weiteren Bereich in Eingriff tritt.

11. Befestigungselement (1) gemäß einem der vorangehenden Ansprüche, **dadurch gekennzeichnet, dass** der horizontale Stab (20) einen ersten Bereich (21) aufweist, der in einer Ebene parallel zur Seitenwand des von mehreren Wänden umschlossenen Raumes verläuft, und wenigstens einen weiteren Bereich (22), der senkrecht zu diesem ersten Bereich verläuft, wobei die Betätigungslasche (4) und die Begrenzungslasche (6) im ersten Zustand des Befestigungselements innenraumseitig des ersten Bereichs des horizontalen Stabs liegen.

12. Befestigungselement (1) gemäß einem der Ansprüche 1 bis 10, **dadurch gekennzeichnet, dass** der horizontale Stab (20) einen ersten Bereich (21) aufweist, der in einer Ebene parallel zur Seitenwand des von mehreren Wänden umschlossenen Raumes verläuft, und wenigstens einen weiteren Bereich (22), der senkrecht zu diesem ersten Bereich (21) verläuft, wobei die Betätigungslasche (4) und die Begrenzungslasche (6) an dem weiteren Bereich angeordnet sind.

13. Befestigungselement (1) gemäß einem der vorangehenden Ansprüche, **dadurch gekennzeichnet, dass** das Befestigungselement einen Auflageabschnitt (8) aufweist, der im befestigtem Zustand des Befestigungselement auf dem horizontalen Stab (20) aufliegt, und wenigstens einen Halteabschnitt (9), der wenigstens einen Teil eines Bereichs des horizontalen Stabs im ersten befestigten Zustand des Befestigungselement zumindest teilweise umgreift.

14. Befestigungselement (1) gemäß einem der vorangehenden Ansprüche, **dadurch gekennzeichnet, dass** das Befestigungselement wenigstens eine Befestigungslasche (10) aufweist, die in einer Ebene parallel zu der Seitenwand und wandseitig des horizontalen Stabs verläuft.

15. Teleskopschiene mit einem Befestigungselement (1) gemäß einem der Ansprüche 1 bis 14.

## Claims

1. Fixing element (1) suitable for detachably mounting a guide rail (11) to a side grid, wherein the side grid extends along a side wall of a room surrounded by a plurality of walls and comprises at least one horizontal rod (20),
wherein the fixing element (1) comprises a flexible detent spring (2) having a latching lug (3), wherein in a first fixed state of the fixing element (1), the latching lug (3) is in a locking engagement with the horizontal rod (20) and bending of the detent spring (2) is effected for releasing the locking engagement, **characterized in that** the detent spring (2) is connected with a rigid actuation tab (4), which in a second state of the fixing element (1) is connected to a limiting tab (6) being connected to the fixing element (1) adjacent to each other in one plane, wherein for releasing the locking engagement in the second state of the fixing element (1), the detent spring (2) is bent in such a way that the latching lug (3) is not in locking engagement with the horizontal rod (20).

2. Fixing element (1) according to claim 1, **characterized in that** in the second state of the fixing element (1), the actuation tab (4) lies in one plane with the limiting tab (6) adjacent to each other in such a way that the smallest distance between the actuation tab (4) and the limiting tab (6) is 5 mm at maximum, preferably 3 mm at maximum and particular preferably 2 mm at maximum.

3. Fixing element (1) according to claim 1 or 2, **characterized in that** the depth and/or width of the actuating tab (4) and/or limiting tab (6) in a position wherein the respective other tab is adjacent to the actuating tab or limiting tab in the second state of the fixing element is between 3 mm and 18 mm, preferably between 8 mm and 12 mm.

4. Fixing element (1) according to one of the preceding claims, **characterized in that** the actuation tab (4) is connected to the detent spring (2) via a cranked portion (5) and **in that** the actuating tab (4) is in general parallel to the detent spring (2) in the first state of the fixing element.

5. Fixing element (1) according to one of the preceding claims, **characterized in that** the actuation tab (4) is located on the side of the detent spring (2) which faces to the latching lug (3).

6. Fixing element (1) according to one of the preceding claims, **characterized in that** the limiting tab (6) is connected to the fixing element via a cranked portion (7) of the fixing element.

7. Fixing element (1) according to one of the preceding claims, **characterized in that** the limiting tab (6) comprises a recess and the actuation tab (4) is arranged such that in the second state of the fixing element, the actuation tab is located adjacent to the limiting tab in one plane within the recess of the limiting tab (6).

8. Fixing element (1) according to one of claims 1 to 6, **characterized in that** the actuation tab (4) comprises a recess and the limiting tab (6) is arranged in such a way that in the second state of the fixing element, the fixing element is located adjacent to the actuation tab (4) in one plane within the recess of the actuation tab (4).

9. Fixing element (1) according to one of the preceding claims, **characterized in that** in the first state of the fixing element, the latching lug (3) is located on the wall facing side of the horizontal rod (20).

10. Fixing element (1) according to one of the preceding claims, **characterized in that** the horizontal rod (20) comprises a first portion (21) extending in a plane parallel to the side wall of the room surrounded by a plurality of walls, and at least one further portion extending perpendicular to said first portion, wherein in the first fixed state of the fixing element, the latching lug (3) engages with the first portion and/or with the further portion.

11. Fixing element (1) according to one of the preceding claims, **characterized in that** the horizontal rod (20) comprises a first portion (21) extending in a plane parallel to the side wall of the room surrounded by a plurality of walls, and at least one further portion (22) extending perpendicular to said first portion, wherein in the first state of the fixing element, the actuation tab (4) and the limiting tab (6) are located on the interior facing side of the first portion of the horizontal rod.

12. Fixing element (1) according to one of claims 1 to 10, **characterized in that** the horizontal rod (20) comprises a first portion (21) extending in a plane parallel to the side wall of the room surrounded by a plurality of walls, and at least one further portion (22) extending perpendicular to said first portion (21), wherein the actuation tab (4) and the limiting tab (6) are arranged on said further portion.

13. Fixing element (1) according to one of the preceding claims, **characterized in that** the fixing element comprises a bearing portion (8), which in the fixed state of the fixing element rests on the horizontal rod (20), and at least one retaining portion (9), which in the fixed state of the fixing element at least partially encompasses at least a part of a portion of the horizontal rod.

14. Fixing element (1) according to one of the preceding claims, **characterized in that** the fixing element comprises at least one fastening tab (10), which extends in a plane parallel to the side wall and on the wall facing side of the horizontal rod.

15. Telescopic rail with a fixing element (1) according to one of claims 1 to 14.

## Revendications

1. Élément de fixation (1), conçu pour la fixation amovible d'un rail de guidage (11) sur une grille latérale, la grille latérale s'étendant sur une paroi latérale d'un espace entouré par plusieurs parois et au moins une tige horizontale (20),
l'élément de fixation (1) comprenant un ressort d'encliquetage flexible (2) avec un embout d'encliquetage (3), l'embout d'encliquetage (3) étant encliqueté, dans un premier état fixé de l'élément de fixation (1), avec la tige horizontale (20) et, pour le dégagement de l'encliquetage, une flexion du ressort d'encliquetage (2) est effectuée, **caractérisé en ce que** le ressort d'encliquetage (2) est relié avec une languette d'actionnement rigide (4) qui se trouve, dans un deuxième état de l'élément de fixation (1), à proximité d'une languette de limitation (6) reliée à l'élément de fixation (1) dans un plan, le ressort d'encliquetage (2) étant fléchi, dans le deuxième état de l'élément de fixation (1), pour le dégagement de l'encliquetage, jusqu'à ce que l'embout d'encliquetage (3) ne soit plus encliqueté avec la tige horizontale (20).

2. Élément de fixation (1) selon la revendication 1, **caractérisé en ce que** la languette d'actionnement (4) se trouve, dans le deuxième état de l'élément de fixation (1), à proximité de la languette de limitation (6) dans un plan, de façon à ce que la distance la plus faible entre la languette d'actionnement (4) et la languette de limitation (6) soit de 5 mm maximum, de préférence de 3 mm maximum et plus particulièrement de préférence de 2 mm maximum.

3. Élément de fixation (1) selon la revendication 1 ou 2, **caractérisé en ce que** la profondeur et/ou la largeur de la languette d'actionnement (4) et/ou de la languette de limitation (6) est, à un endroit auquel l'autre languette se trouve à proximité dans un plan de la languette d'actionnement ou de la languette de limitation dans le deuxième état de l'élément de fixation, entre 3 et 18 mm, de préférence entre 8 mm et 12 mm.

4. Élément de fixation (1) selon l'une des revendications précédentes, **caractérisé en ce que** la languette d'actionnement (4) est reliée, par l'intermédiaire d'une portion pliée (5) du ressort d'encliquetage (2), avec celui-ci et s'étend, dans le premier état de l'élément de fixation, globalement parallèlement au ressort d'encliquetage (2).

5. Élément de fixation (1) selon l'une des revendications précédentes, **caractérisé en ce que** la languette d'actionnement (4) se trouve sur le côté du ressort d'encliquetage (2) orienté vers l'embout d'encliquetage (3).

6. Élément de fixation (1) selon l'une des revendications précédentes, **caractérisé en ce que** la languette de limitation (6) est reliée, par l'intermédiaire d'une portion pliée (7) de l'élément de fixation, avec celui-ci.

7. Élément de fixation (1) selon l'une des revendications précédentes, **caractérisé en ce que** la languette de limitation (6) présente un évidement et la languette d'actionnement (4) est disposée de façon à ce que, dans un deuxième état de l'élément de fixation, elle se trouve à l'intérieur de l'évidement de la languette de limitation (6) à proximité de la languette de limitation dans un plan.

8. Élément de fixation (1) selon l'une des revendications 1 à 6, **caractérisé en ce que** la languette d'actionnement (4) présente un évidement et la languette de limitation (6) est disposée de façon à ce que, dans un deuxième état de l'élément de fixation, elle se trouve à l'intérieur de l'évidement de la languette d'actionnement (4) à proximité de la languette d'actionnement (4) dans un plan.

9. Élément de fixation (1) selon l'une des revendications précédentes, **caractérisé en ce que** l'embout d'encliquetage (3) se trouve, dans un premier état de l'élément de fixation, du côté de la tige horizontale (20) orienté vers la paroi.

10. Élément de fixation (1) selon l'une des revendications précédentes, **caractérisé en ce que** la tige horizontale (20) comprend une première zone (21) qui s'étend dans un plan parallèlement à la paroi latérale de l'espace entouré par plusieurs parois et au moins une autre zone qui s'étend perpendiculairement à cette première zone, l'embout d'encliquetage (3) s'encliquetant, dans le premier état fixé de l'élément de fixation, avec la première zone et/ou avec l'autre zone.

11. Élément de fixation (1) selon l'une des revendications précédentes, **caractérisé en ce que** la tige horizontale (20) comprend une première zone (21) qui s'étend dans un plan parallèlement à la paroi latérale de l'espace entouré par plusieurs parois et au moins une autre zone (22) qui s'étend perpendiculairement à cette première zone, la languette d'actionnement (4) et la languette de limitation (6) se trouvant, dans le premier état de l'élément de fixation, à l'intérieur de la première zone de la tige horizontale.

12. Élément de fixation (1) selon l'une des revendications 1 à 10, **caractérisé en ce que** la tige horizontale (20) comprend une première zone (21) qui s'étend dans un plan parallèlement à la paroi latérale de l'espace entouré par plusieurs parois et au moins une autre zone (22) qui s'étend perpendiculairement à cette première zone (21), la languette d'actionnement (4) et la languette de limitation (6) étant disposée sur l'autre zone.

13. Élément de fixation (1) selon l'une des revendications précédentes, **caractérisé en ce que** l'élément de fixation présente une portion d'appui (8) qui, dans l'état fixé de l'élément de fixation, s'appuie sur la tige horizontale (20), et au moins une portion de maintien (9), qui entoure au moins partiellement au moins une partie d'une zone de la tige horizontale dans un premier état fixé de l'élément de fixation.

14. Élément de fixation (1) selon les revendications précédentes, **caractérisé en ce que** l'élément de fixation comprend au moins une languette de fixation (10) qui s'étend dans un plan parallèlement à la paroi latérale et du côté de la tige horizontale orienté vers la paroi.

15. Rail télescopique avec un élément de fixation (1) selon l'une des revendications 1 à 14.
